Europäisches Patentamt

European Patent Office

Office européen des brevets

(19)

(11) Numéro de publication : **0 484 200 A1**

# (12) DEMANDE DE BREVET EUROPEEN

(21) Numéro de dépôt : **91402809.7**

(22) Date de dépôt : **22.10.91**

(51) Int. Cl.⁵ : **G06F 15/16**

(30) Priorité : **30.10.90 FR 9013444**

(43) Date de publication de la demande :
**06.05.92 Bulletin 92/19**

(84) Etats contractants désignés :
**DE GB**

(71) Demandeur : **THOMSON-CSF**
**51, Esplanade du Général de Gaulle**
**F-92800 Puteaux (FR)**

(72) Inventeur : **Demeure, Alain**
**THOMSON-CSF, SCPI, Cédex 67**
**F-92045 Paris la Défense (FR)**
Inventeur : **Brunel, Philippe**
**THOMSON-CSF, SCPI, Cédex 67**
**F-92045 Paris la Défense (FR)**
Inventeur : **Thirard, Vincent**
**THOMSON-CSF, SCPI, Cédex 67**
**F-92045 Paris la Défense (FR)**

(74) Mandataire : **Desperrier, Jean-Louis et al**
**THOMSON-CSF SCPI**
**F-92045 PARIS LA DEFENSE CEDEX 67 (FR)**

(54) **Procédé de configuration d'un système informatique maillé.**

(57)    Dans un réseau informatique maillé non hiérarchisé on a organisé la transmission des données sur un réseau comportant des noeuds reliés par des branches constituées de liens élémentaires non directionnels identiques, en organisant des chemins logiques allant d'un noeud à un autre par l'intermédiaire éventuel d'autres noeuds en réservant le nombre nécessaire de liens élémentaires sur les branches nécessaires à ces chemins. L'état libre/occupé de tous les liens est mémorisé au niveau de chaque noeud. Un jeton d'autorisation circulant de noeud en noeud autorise le noeud qui le reçoit à réserver à partir de la table d'occupation des liens ceux qui lui sont nécessaires pour établir ces transmissions. Le noeud transmet ensuite ses réservations aux autres et libère le jeton pour le noeud suivant.

Ceci permet d'obtenir une circulation de données non hiérarchisées et sans blocage.

Fig. 1

La présente invention se rapporte aux procédés qui permettent de configurer les systèmes informatiques maillés c'est-à-dire des systèmes informatiques composés d'un certain nombre de moyens de calculs localisés dans des noeuds reliés entre eux par un ensemble de connexions formant d'un noeud à un autre des branches constituant elles-mêmes un ensemble de mailles.

On connait de nombreuses architectures de réseaux maillés à organisation hiérarchique ou non.

Dans une organisation hiérarchique l'un des noeuds est spécialisé pour déterminer de manière centralisée et autoritaire le routage entre les différents noeuds, éventuellement par l'intermédiaire d'une structure pyramidale. Un tel réseau présente l'inconvénient de faire reposer la totalité du fonctionnement sur un seul noeud, ce qui à la fois alourdit l'exploitation et la rend très sensible aux pannes et aux blocages qui peuvent se situer dans ce noeud et dans la répartition des ordres qu'il donne aux autres noeuds.

Dans un réseau décentralisé (non hiérarchisé) on envoie par exemple sur les liaisons les informations par paquets munis d'un en-tête correspondant à la destination. A chaque passage dans un noeud celui-ci détermine le routage jusqu'au prochain noeud en fonction de cet en-tête et des disponibilités des branches. Ce système présente lui l'inconvénient de ralentir rapidement le débit des données au fur et à mesure que le réseau est chargé et d'aboutir assez vite à une situation de blocage.

Pour pallier ces inconvénients l'invention propose un procédé de configuration d'un système informatique maillé non hiérarchisé formé d'un ensemble de noeuds réunis par des branches , caractérisé en ce qu'on forme les branches avec un ensemble de liens élémentaires monodirectionnels identiques en nombre variable selon la branche mais fixes pour une branche, on réserve selon les besoins momentanés de transmission entre les noeuds des chemins logiques allant d'un noeud à au moins un autre par l'intermédiaire éventuel d'autres noeuds et constitué d'un nombre déterminé de liens élémentaires, on mémorise en permanence dans chaque noeud l'état libre ou occupé de l'ensemble des liens élémentaires constituant les chemins logiques, on fait circuler de noeud en noeud sur l'ensemble du réseau un jeton qui autorise le noeud qui le reçoit à établir les chemins logiques qui lui sont nécessaires à cet instant en réservant les liens élémentaires correspondants parmi les liens libres dont l'état est mémorisé dans la table du noeud, on met à jour cette table puis on en adresse le contenu à tous les autres noeuds, on bloque la transmission du jeton pendant le temps nécessaire à la détermination des chemins logiques et à l'envoi du contenu de la table vers le noeud suivant, et on libère ensuite le jeton pour l'envoyer vers ce noeud suivant.

D'autres particularités et avantages de l'invention apparaîtront clairement dans la description suivante faite en regard des figures annexées qui représentent :

– la figure 1, le schéma général d'un réseau selon l'invention ;
– la figure 2, la structure générale d'un noeud selon l'invention ;
– la figure 3, le schéma d'un commutateur "crossbar" élémentaire ; et
– la figure 4, un réseau de couplage formé de 6 commutateurs comme celui de la figure 3.

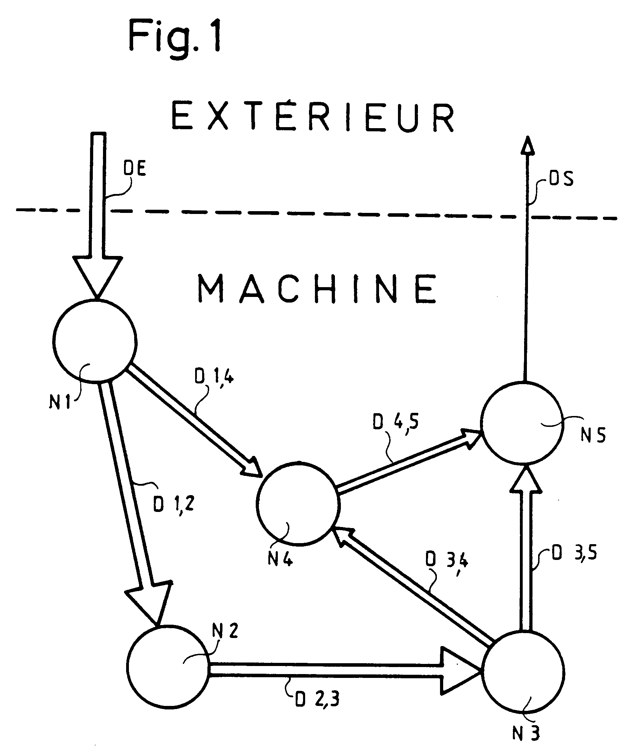

On a représenté sur la figure 1 un réseau dont l'architecture est conforme à l'invention et qui comprend 5 noeuds N1 à N5 reliés entre eux par des branches Di,j pour lesquelles i est l'indice du noeud de départ et j l'indice du noeud d'arrivée. cette machine communique entre outre avec l'extérieur pour recevoir des données et en émettre par des branches d'interface DE et DS.

Les débits possibles sur les liaisons sont figurés par l'épaisseur des flèches représentant les branches. On remarque que ces débits sont différents selon les branches. En outre les branches sont unidirectionnelles et toutes les liaisons ne sont pas autorisées d'un noeud à un autre, même indirectement.

La structure de ce réseau est déterminée en fonction des applications qu'elle est amenée à supporter, c'est-à-dire des traitements informatiques qui sont effectués à l'intérieur des noeuds, et des échanges de données nécessaires entre les noeuds, pour ces traitements. Cette structure est telle que la topologie, c'est-à-dire la répartition des branches entre les noeuds, est optimisée pour une application et que le dimensionnement de ces branches, c'est-à-dire leur capacité en débit, est calculé pour garantir les délais d'acheminement nécessaires pour cette application. Dans le cas où il faut faire tourner plusieurs applications différentes, exclusives dans le temps, sur cette machine, on prévoit une superposition optimale des différentes topologies et des différents dimensionnements.

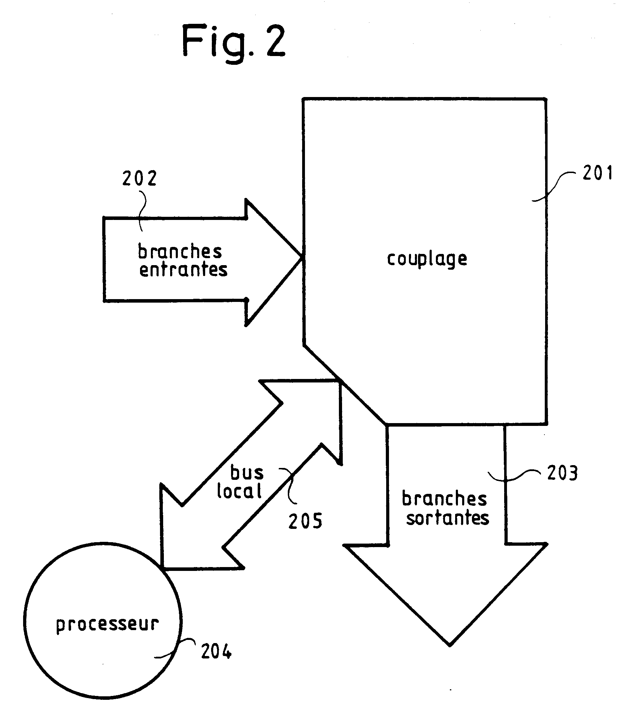

On a représenté sur la figure 2 la structure générale d'un noeud qui comprend un dispositif de couplage 201 recevant toutes les branches entrantes 202 du noeud et émettant sur toutes les branches sortantes 203 du noeud. Le traitement effectué dans le noeud se fait dans un processeur local 204 qui est relié au dispositif de couplage 201 par un bus local 205 sur lequel circulent les données entrant par les branches 202 et sortant par les branches 203, ainsi que des ordres destinés à réserver dans le dispositif de couplage les connexions nécessaires entre ces différentes branches, selon un processus qui sera vu plus loin.

Selon les traitements qui ont lieu dans les noeuds, les débits inter-noeuds sont variables. Pour pouvoir adapter les branches aux débits, en tenant compte que sur une même branche circulent des flux de données distinctes quine sont pas destinées à un même noeud final, selon l'invention on compose une branche avec plusieurs liens élémentaires identiques dont le nombre permet d'acheminer les données dans les délais nécessaires à l'application.

Un lien élémentaire forme donc une liaison, série par exemple, de débit monodirectionnel fixe, par exemple 100 Mbits/s utiles, et représente un quantum de connexion disponible. Si le débit est plus grand que ce quantum, on utilise deux liens élémentaires simultanément. Les bandes passantes de chacun de ces liens dans l'exemple cité seront donc sensiblement de 3 Mmots-32 bits/s.

Le nombre de liens élémentaires juxtaposés dans une branche est donc déterminé par la somme des débits des échanges simultanés susceptibles de passer dans cette branche dans le pire des cas pour respecter les temps d'acheminement souhaités. Eventuellement on rajoutera à cette branche au moins un lieu élémentaire permettant de respecter les délais d'acheminement en cas de panne.

Compte tenu de ces définitions on définit donc un lien logique qui correspond à l'ensemble des liens élémentaires d'une branche qui sont affectés momentanément à un transfert jusqu'à ce que celui-ci soit terminé.

De même on définit un chemin logique qui est constitué par la concaténation des liens logiques depuis le noeud émetteur jusqu'au noeud récepteur. Ce chemin logique, comme les liens logiques qui le constituent, est déterminé pour une durée de transfert et il disparaît ensuite, pour être au besoin reconstitué ultérieurement. En fait comme un processus de transfert n'a pas d'à priori sur le chemin logique qu'emprunteront les données échangées et que les liens élémentaires qui ont été utilisés dans la constitution des liens logiques à un moment seront peut-être indisponibles lors d'un transfert ultérieur, les chemins logiques utilisés plus tarpour effectuer un transfert semblable, c'est-à-dire de même débit et entre deux mêmes noeuds, seront dans la plupart des cas différents du premier et différents entre eux.

Pour pouvoir effectuer un tel transfert, le dispositif est prévu pour, dès qu'un traitement dans un noeud requiert une communication avec un autre noeud, explorer toutes les possibilités de communication et utiliser la plus courte (donc celle qui utilise le moins de bande passante globale du réseau), jusqu'à la plus détournée dans les limites compatibles avec l'explosion combinatoire qui résulte de la combinaison d'un certain nombre de noeuds avec un certain nombre de liens élémentaires. Les procédés de traitement qui permettent de déterminer de tels chemins sont en eux-mêmes bien connus dans les dispositifs centralisés qui sont confrontés au même problème.

Toutefois dans les systèmes centralisés la détermination des chemins s'effectue par principe dans le processeur centralisateur qui contient en mémoire la liste de tous les chemins logiques existant à un instant donné. Il reçoit d'un noeud une demande de communication vers un autre noeud, détermine le chemin logique à mettre en place et envoie ses ordres aux différents commutateurs. De même lorsque le chemin logique n'est plus utile il libère les liens logiques qui sont alors disponibles pour être affectués à d'autres chemins logiques. Les états d'occupation des liens logiques sont mémorisés dans une table qui est remise à jour au fur et à mesure.

Dans une structure décentralisée selon l'invention un tel processus n'est plus possible. Aussi, selon l'invention, on mémorise dans la mémoire des processeurs de chaque noeud la table d'occupation des liens élémentaires formant les chemins logiques utilisés à chaque instant. Ainsi chaque noeud connaît l'état libre ou occupé de tous les liens élémentaires de l'ensemble du réseau. Cette solution est certainement très redondante, ce qui devrait a priori l'écarter dans l'esprit des concepteurs de réseaux, mais en définitive elle n'occupe qu'une place relativement réduite dans la mémoire des processeurs, compte tenu des tailles imposantes des mémoires qui sont maintenant utilisées de manière courante. Ainsi, pour un réseau tout à fait important comportant par exemple 100 noeuds et 10 liens élémentaires sortant de chaque noeud, les dimensions de la table d'occupation seront d'un peu plus de 1, 8 kilobits compte tenu des bits de service nécessaires en sus des bits utiles. Ce chiffre est tout à fait insignifiant face aux mégabits couramment utilisés dans le moindre ordinateur personnel.

A partir d'une configuration donnée, il faut pouvoir modifier celle-ci selon les demandes émanant des noeuds en fonction des traitements qui s'y déroulent. Pour cela, selon l'invention, on fait circuler de noeud en noeud un signal d'autorisation, dit "jeton", qui vient autoriser chacun des noeuds qu'il reçoit à constituer les nouveaux chemins logiques dont il a besoin, à partir de la table d'occupation des liens logiques qu'il a mémorisée. Après avoir déterminer son chemin logique, le noeud envoie aux divers noeuds un message comportant un avis d'occupation et éventuellement un avis de libération des liens logiques qui viennent d'être déterminés, et il libère le jeton qui passe au noeud suivant. Cet avis circulera a priori vers le prochain noeud destinataire du jeton par le même lien logique sur lequel circule le jeton et ce noeud récepteur du jeton remettra d'abord à jour sa table d'occupation en fonction de cet avis.

Le jeton circule de noeud en noeud par un chemin logique formé d'une suite de liens élémentaires uniques puisque le débit correspondant au jeton est tout à fait infime. Ce chemin logique sera alors figé a priori, sauf à le reconfigurer en cas de panne, de manière à permettre une circulation la plus rapide possible dans tout le réseau afin que les noeuds aient un égal accès aux autorisations. Compte tenu du débit possible sur les liens logiques, le jeton peut visiter l'ensemble du réseau extrêmement rapidement, moins de 5 ms pour tout le gros réseau pris pour exemple ci-dessus. Bien entendu chaque fois qu'un noeud recalcule un chemin logique le jeton est retenu dans ce noeud, ce qui ralentit sa progression. Si donc tous les noeuds recalculaient successivement des chemins logiques le circuit du jeton prendrait nettement plus longtemps. Toutefois cette situation est statistiquement très rare et on obtient en moyenne des vitesses très satisfaisantes.

On remarque que si l'avis d'occupation/libération doit aller directement vers le prochain noeud recevant le jeton, il peut par contre se propager dans le désordre dans l'ensemble du réseau pour mettre à jour les tables d'occupation des autres noeuds. En effet, compte tenu des durées de traitement, ces autres noeuds peuvent recevoir l'avis d'occupation/libération avant le jeton et la table sera ainsi remise à jour par avance. Si toutefois ce n'est pas le cas l'avis d'occupation/libération arrivera au pire en même temps que le jeton et il n'y aura pas de risque d'erreur.

Dans tous les cas le noeud qui se calcule un chemin logique s'octroie en bloc tous les liens élémentaires le mettant en relation avec le ou les noeuds auxquels il adresse un message.

Cette méthode de jeton d'autorisation évite donc tous les problèmes de blocage connus sous le nom anglo-saxon de "dead-lock". Ainsi qu'elle que soit la topologie du réseau, malgré des chemins qui se mordent la queue selon la terminologie anglo-saxonne de "cycling", il n'y aura pas de situation de blocage mutuel.

Comme il n'y a pas de mécanisme central d'allocation chaque émetteur cherche, dès qu'il a des besoins définis de transfert en émission en attente, le chemin logique qui pourra satisfaire à ses besoins au vu de l'état des liens élémentaires mémorisés dans sa table d'allocation.

Il n'y a pas besoin d'attendre le passage du jeton d'autorisation pour effectuer cette recherche, puisque tant que le jeton n'est pas là l'émission des avis de prise des liens élémentaires est suspendue. On gagne ainsi éventuellement la durée du processus de calcul de routage.

Si entre le moment où les chemins logiques ont été déterminés et celui où le jeton arrive, le noeud reçoit en provenance des autres noeuds des avis d'occupation de liens logiques qu'il se propose de réserver, il recalcule ses chemins et ainsi de suite jusqu'à ce que le jeton arrive avec, comme on l'a vu plus haut, éventuellement un dernier avis de prise du noeud sur lequel le jeton était à l'instant précédent. L'arrivée du jeton autorise donc le noeud à prendre effectivement possession des chemins logiques préalablement calculés ou éventuellement de ceux résultant d'un dernier calcul dû à l'arrivée avec le jeton d'un dernier avis d'occupation.

Sitôt acquise l'autorisation, le transfert s'effectue en deux phases. Tout d'abord le noeud émetteur envoie à tous les noeuds du réseau les avis de réservation déterminant les commandes de commutation correspondant à l'établissement des chemins logiques calculés. Le temps de propagation dépend des voies empruntées (au plus simple, mais au plus lent elles se confondent avec celles du jeton). Dans un deuxième temps l'émetteur envoie ensuite son bloc de données en boucle ouverte et avec tout le débit dont le chemin logique est capable.

Les liens élémentaires sont formés de connexions classiques dans les réseaux de processeur informatique. La synchronisation s'effectue par une horloge basse fréquence qui est distribuée à tous noeuds, avantageusement par le même chemin que le jeton. L'horloge haute fréquence est reconstituée de manière connue au niveau du noeud à partir de cette horloge basse fréquence.

Pour accélérer les communications 'à l'intérieur du noeud, d'autant plus que les données qui transitent dans ce noeud n'ont pas nécessairement besoin d'y être traitées lorsque celui-ci n'est qu'une étape de liaison intermédiaire, l'invention propose, comme on l'a représenté sur la figure 2, de dissocier la partie processeur 204 de la partie couplage 201 et en outre de réaliser cette partie couplage sous la forme d'un réseau du type "cross-bar". Celui-ci n'est pas nécessairement carré puisque, selon les besoins de la ou des applications, il peut y avoir plus de liens entrant que de liens sortant ou vice versa.

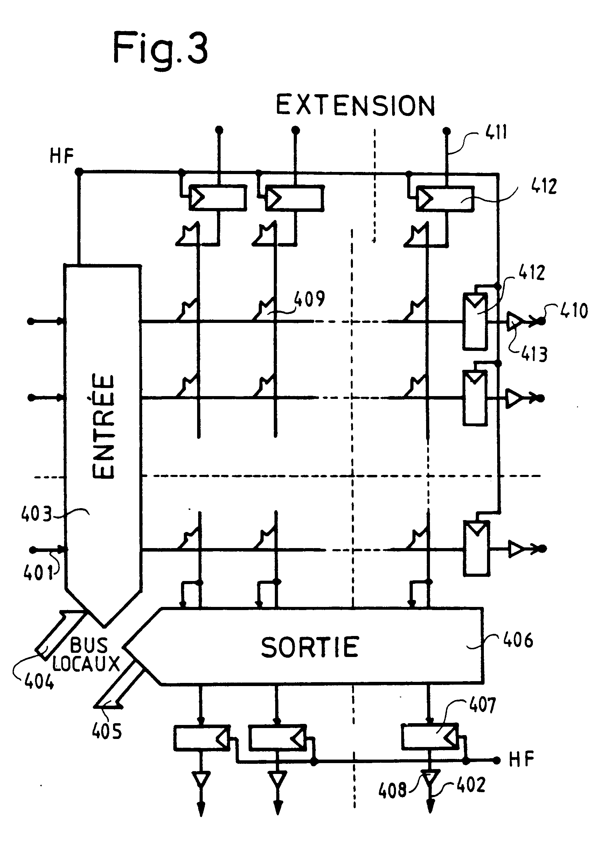

Toutefois, afin de faciliter la construction modulaire du réseau de couplage, l'invention propose de réaliser les dispositifs de couplage 201 avec un ensemble de commutateurs "cross-bar" carrés identique, formant par exemple des matrices 8 x 8 comme représenté sur la figure 3.

Ce commutateur élémentaire comprend des ports d'entrée 401 pour les liens élémentaires entrants et des ports de sortie 402 pour les liens élémentaires sortants.

Les ports 401 arrivent sur un circuit d'entrée 403 qui les laisse passer par une connexion directe et permet d'injecter sur ceux-ci les données provenant du processeur 204 par l'intermédiaire d'un bus local 404 de sortie de ce processeur. On remarquera que la sortie du processeur du noeud se fait sur l'entrée du connecteur de couplage de manière à pouvoir obtenir la répartition vers le ou les liens élémentaires de sortie sélectionnés par ce connecteur. La situation est inverse pour le bus local 405 d'entrée vers le processeur 204.

Les ports 402 proviennent d'un circuit de sortie 406 dont le rôle est symétrique de celui du circuit 403 pour laisser passer les liaisons provenant du réseau "cross-bar" vers les ports 402 et alimenter le bus local entrant 405 du processeur 204 par une dérivation des signaux provenant de ce réseau "cross-bar". En outre les signaux appliqués sur les ports 402 sont régénérés par des portes 407 alimentées par la haute fréquence locale, et amplifiés par des amplificateurs 408.

Le réseau d'aiguillage "cross-bar" est formé de commutateurs 409 placés aux points de connexion des prolongements des ports 401 et 402. Ces commutateurs fonctionnent de manière connue et sont sélectionnés par des signaux provenant des moyens de traitement locaux et arrivant par des connexions non représentées. Ces moyens de traitement locaux peuvent faire partie du processeur 204 et arriver sur sur les commutateurs 409 par l'intermédiaire du bus local 404 et du circuit d'entrée 403 ou, selon une variante avantageuse de l'invention, d'un organe spécialisé qui sera décrit plus loin.

Le circuit d'entrée 403, outre les fonctions décrites plus haut, est donc utilisé pour différents travaux de servitude tels que cette commande des commutateurs, l'extraction de l'horloge et le détournement provisoire du jeton sur le lien où il circule pendant la phase de calcul des itinéraires par le processeur local.

Le commutateur élémentaire comprend par ailleurs deux ensembles de ports d'extension permettant justement la modularité décrite plus haut. L'un de ces ensembles, situé à droite sur la figure, recopie sur des sorties 410 les entrées sur les ports 401. Les sorties des ports 402 recopient elles les entrées des ports d'extension 411 situés en haut sur la figure. Ces deux ensembles sont munis eux aussi de portes 412 actionnées par la haute fréquence locale pour régénérer les signaux et les ports 410 comprennent eux aussi des amplificateurs 412.

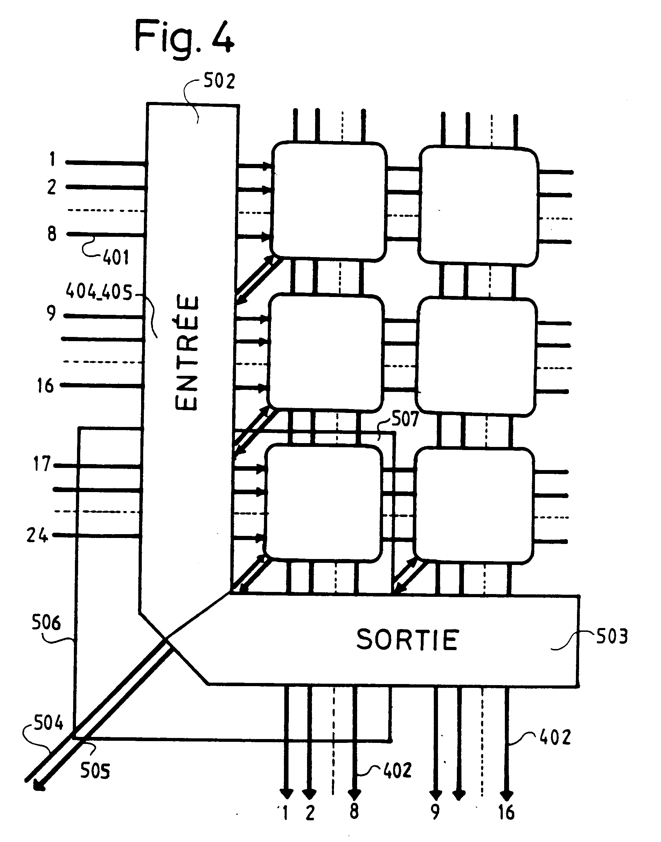

Pour former un réseau de couplage 201, si celui-ci excède les capacités d'un commutateur élémentaire tel que celui de la figure 4, on rassemble plusieurs de ces commutateurs selon une matrice en réunissant les entrées de l'un aux sorties de l'autre, comme représenté sur la figure 5. Sur cette figure 5 on a 6 commutateurs élémentaires tels que 501, de type 8 x8, réunis de manière à disposer de 24 ports 401 en entrée et de 16 ports élémentaires 402 en sortie. Les ports d'entrée et de sortie traversent respectivement des répartiteurs de fusion d'entrée et de sortie 502 et 503, auxquels les bus locaux 404 et 405 sont réunis pour former en sortie de ces deux dispositifs deux super-bus locaux 504 et 505 permettant chacun un débit équivalent à celui de tous les liens d'entrée pour l'un et de tous les liens de sortie pour l'autre.

En ce qui concerne la circulation des données seuls les bus locaux des 4 commutateurs élémentaires reliés directement aux répartiteurs 502 et 503 sont actifs, puisque les deux autres commutateurs qui ne sont pas directement reliés aux liens ne jouent qu'un rôle de commutation et ne servent pas pour dériver les données vers le processeur local 204.

La gestion du transfert des données entre les noeuds, c'est-à-dire la réception et l'émission du jeton d'autorisation, le calcul des chemins, et le positionnement des commutateurs du "cross-bar", pourraient être effectués par le processeur local du noeud 204, mais ceci conduirait à le compliquer et à le surcharger inutilement pour des tâches se répétant à une cadence beaucoup plus faible que celle qu'il exécute principalement.

Dans ces conditions l'invention propose de confier ces tâches à un processeur annexe 506 qui servira de serveur de routage pour convertir les requêtes en émission en chemins logiques réalisable dans l'instant.

Ce serveur de routage sera de préférence associé au commutateur élémentaire 507 situé en bas en gauche sur la figure et qui forme la base du réseau de couplage du noeud à partir duquel on peut augmenter celui-ci en rajoutant d'autres commutateurs élémentaires. Ce positionnement est d'autant plus approprié que l'on a intérêt, pour limiter le temps de transit du jeton sur le réseau, à faire circuler celui-ci par un chemin empruntant le lien N° 24 en entrée et le lien N° 1 en sortie. Le serveur de routage étant chargé de repérer l'arrivée du jeton, de le bloquer pendant le calcul du routage et de le renvoyer ensuite, cette association sera la plus propice. Dans ces conditions, ce serveur communiquera par des connexions non représentées qui pourront passer par les répartiteurs 502 et 503 et qui seront uniquement destinés à commander le positionnement des commutateurs internes des commutateurs élémentaires.

## Revendications

1. Procédé de configuration d'un système informatique maillé non hiérarchisé formé d'un ensemble de noeuds réunis par des branches, dans lequel on forme les branches avec un ensemble de liens élémentaires monodirectionnels identiques en nombre variable selon la branche mais fixes pour une branche, on réserve selon les besoins momentanés de transmission entre les noeuds des chemins logiques allant d'un noeud à au moins un autre par intermédiaire éventuel d'autres noeuds et constitué d'un nombre déterminé de liens élémentaires, on mémorise en permanence dans chaque noeud l'état libre ou occupé de l'ensemble des liens élémentaires constituant les chemins logiques, on fait circuler de noeud en noeud sur l'ensemble du réseau un jeton qui autorise le noeud qui le reçoit à établir les chemins logiques qui lui sont nécessaires à cet instant en réservant les liens élémentaires correspondants parmi les liens libres dont l'état est mémorisé dans la table du noeud, on met à jour cette table puis on en adresse le contenu à tous les autres noeuds, on bloque la transmission du jeton pendant le temps nécessaire à la détermination des chemins logiques et à l'envoi du contenu de la table vers le noeud suivant, et on libère ensuite le jeton pour l'envoyer vers ce noeud suivant.

2. Procédé selon la revendication 1, dans lequel on fait circuler le jeton d'autorisation sur un chemin logique fixe qui minimise la durée du parcours de ce jeton pour traverser tous les noeuds.

3. Système informatique maillé non hiérarchisé qui comprend un ensemble de commutateurs connectés pour former un commutateur de type "cross-bar", des moyens d'entrée connectés à un ensemble de ports entrants et à un bus local sortant pour les connecter aux entrées du commutateur "cross-bar", et des moyens de sortie connectés aux sorties du commutateur "cross-bar" pour alimenter un ensemble de ports sortant et un bus local entrant.

4. Dispositif selon la revendication 3, qui comprend en outre des moyens reliés aux entrées et aux sorties du commutateur "cross-bar" pour permettre de relier entre eux un ensemble de ces dispositifs pour former un dispositif de couplage étendu dont la capacité est un multiple de celle du dispositif élémentaire.

5. Dispositif selon la revendication 4, dans lequel les moyens d'entrée (403) et les moyens de sortie (406) permettent de relier le dispositif respectivement à un même nombre de ports entrants et sortants.

# Fig.1

EXTÉRIEUR

MACHINE

DE

DS

N1

D 1,4

D 1,2

D 4,5

N5

N4

D 3,4

D 3,5

N2

D 2,3

N3

# Fig. 2

202 branches entrantes

201 couplage

205 bus local

204 processeur

203 branches sortantes

# Fig.3

Fig. 4

Office européen
des brevets

**RAPPORT DE RECHERCHE EUROPEENNE**

Numero de la demande

EP    91 40 2809

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | 8TH ANNUAL INTERNATIONAL PHOENIX CONFERENCE ON COMPUTERS AND COMMUNICATIONS: CONFERENCE PROCEEDINGS 22 Mars 1989, SCOTTDALE, ARIZONA, US pages 386 - 390; S.CHITTOR: 'Link switching: a communication architecture for configurable parallel systems' * le document en entier * | 3-5 | G06F15/16 |
| A | | 1-2 | |
| | --- | | |
| A | WO-A-8 501 850 (GENERAL ELECTRIC COMPANY PLC) * page 8, ligne 9 - page 41, ligne 26; figures 7,8,10 * | 1-5 | |
| | --- | | |
| A | WO-A-8 901 665 (REGENTS OF THE UNIVERSITY OF MINESOTA) * page 4, ligne 13 - ligne 31 * * page 7, ligne 10 - page 8, ligne 28 * * page 11 - page 23, ligne 5; figures 1,6,9 * | 1-5 | |
| | ----- | | **DOMAINES TECHNIQUES RECHERCHES (Int. Cl.5 )** |
| | | | G06F |

Le présent rapport a été établi pour toutes les revendications

| Lieu de la recherche | Date d'achèvement de la recherche | Examinateur |
|---|---|---|
| LA HAYE | 28 JANVIER 1992 | SOLER J.M.B. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................
& : membre de la même famille, document correspondant

EPO FORM 1503 03.82 (P0402)